Europäisches Patentamt

(19) European Patent Office

Office européen des brevets

(11) Publication number: **0 113 327**
**B1**

(12) **EUROPEAN PATENT SPECIFICATION**

(45) Date of publication of patent specification: **17.02.88**

(21) Application number: **83850344.9**

(22) Date of filing: **27.12.83**

(60) **Consolidated with 84900333.0/0159991 (European application No./publication No.) by decision dated 27.03.86.**

(51) Int. Cl.⁴: **A 21 B 7/00, A 21 B 1/22, A 21 C 1/00**

(54) **An apparatus for automatic preparation of food products such as bread, cakes and the like.**

(30) Priority: **28.12.82 SE 8207438**

(43) Date of publication of application:
**11.07.84 Bulletin 84/28**

(45) Publication of the grant of the patent:
**17.02.88 Bulletin 88/07**

(84) Designated Contracting States:
**AT BE CH DE FR GB IT LI LU NL SE**

(56) References cited:
**FR-A-2 152 618**
**FR-A-2 389 947**
**US-A-3 194 185**
**US-A-3 873 735**
**US-A-4 234 605**

(73) Proprietor: **Heden-Team Aktiengesellschaft**
**P.O. Box 777**
**FL-9497 Triesenberg (LI)**

(72) Inventor: **Hedenberg, Gunnar**
**Ejderstigen 15**
**S-450 33 Grundsund (SE)**

(74) Representative: **Abnett, Richard Charles et al**
**REDDIE & GROSE 16 Theobalds Road**
**London WC1X 8PL (GB)**

Courier Press, Leamington Spa, England.

## Description

The present invention concerns an apparatus for automatically making food products in piece form from dry and/or wet substances.

Background of the invention

Baking e.g. bread for household purposes is a relatively complicated, time consuming, work intensive and messy business. Since the quality of the bread depends so much on the fermentation time or more generally on the fermentation procedure being performed under the correct conditions, which takes a relatively long time, there are few people who have the privilege of eating fresh home-made bread at any time of the day.

Through the US—A—4 234 605 there is known a bread baking apparatus, in which one and the same vessel is used for mixing the ingredients and kneading the dough. Further the fermentation as well as the baking of the dough takes place in this vessel in one and the same dough preparation and baking station. This baking apparatus in fact is only suited for relatively liquid doughs and since neither the vessel, the dough preparation utensils nor the lid of the vessel will be cleaned between the dough kneading procedure and baking, dough adhered to these utensils will be burned and stuck during the baking procedure, which on one hand can influence the taste of the baked product and on the other hand makes the cleaning considerably more difficult. The baking apparatus also requires relatively complicated equipment with special driving means for raising and lowering the vessel to and from the kneading—and mixing devices. This known apparatus comprises all the features enumerated in the first part of claim 1.

In FR—A—2.152.618 is disclosed an apparatus for mixing materials such as food products and bacteriological samples. The material is contained in a flexible bag and motor-driven kneading means are arranged to exert a kneading action on the bag, so that its content is mixed. This apparatus is however designed only to perform a mixing and a homogenization of the material, which can be in the form of liquid or semi-liquid substances. It is not adapted to bring about an effective mixing and kneading of dough-like substances.

In US—A—3.873.735 is disclosed a sealed food package containing partially cooked or uncooked foods. The food can be heated by inserting the package in a heating device, e.g. a toaster. There is however no indication of an apparatus for automatic food preparation, e.g. baking of bread.

Summary and advantages of the invention

The object of the invention is to provide a baking apparatus which can produce food products such as bread, without any real manual work involved, without soiling various vessels and utensils and which apparatus is capable of performing the mixing and kneading operations of the dough-like substance in a very effective way.

Another object of the invention is to provide a baking apparatus the construction of which is simple and therefore relatively inexpensive to manufacture. It should also be compact, it should not require any more space than e.g. a coffee percolator, as it should be placed on a work bench or washing stand in the kitchen.

This is achieved by the features in the characterising portion of claim 1.

Brief description of the drawings

Figure 1 shows a section through a first embodiment of the baking apparatus according to the invention with a separate dough preparation and heat treatment station.

Figure 2 shows on a larger scale a section through a roller which is part the apparatus according to Figure 1.

Figure 3 shows the roller according to Figure 2 in perspective.

Figure 4—6 show sections through a second embodiment of a modified baking apparatus.

Figure 7 is a section through a baking apparatus according to a third embodiment where the dough preparation takes place in cooperation with the baking oven.

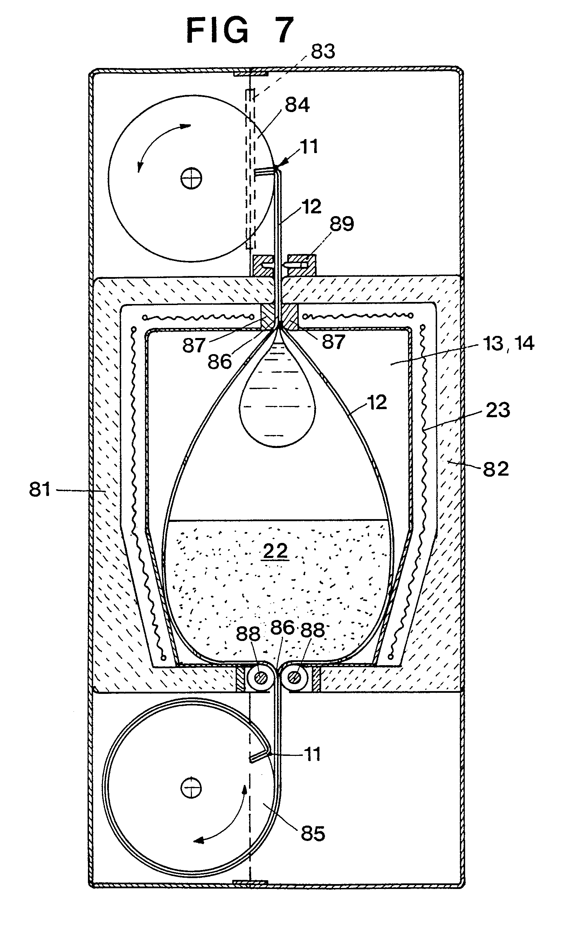

Fiure 8 shows a section through a fourth embodiment of the baking apparatus modified with respect to Fig. 7.

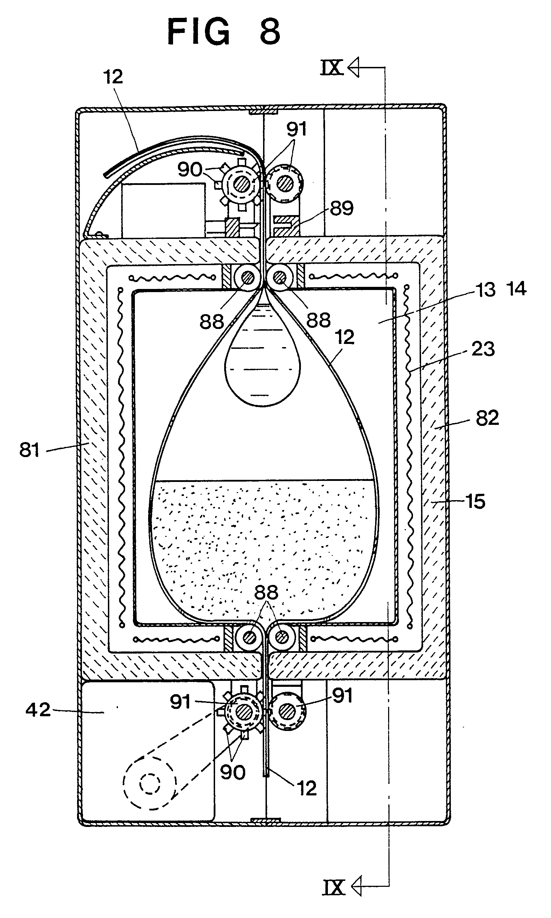

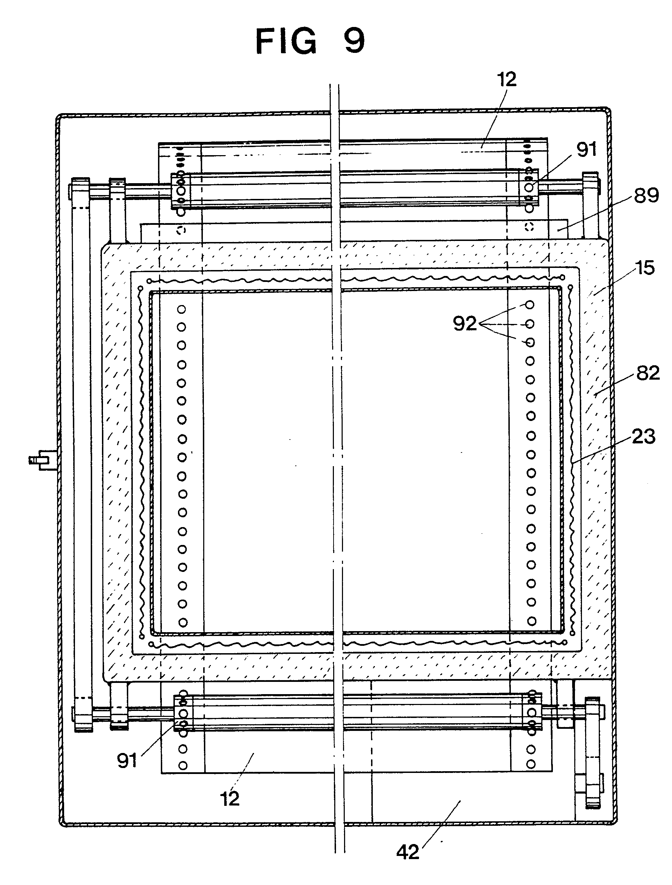

Figure 9 shows a section according to the line IX—IX in Figure 8.

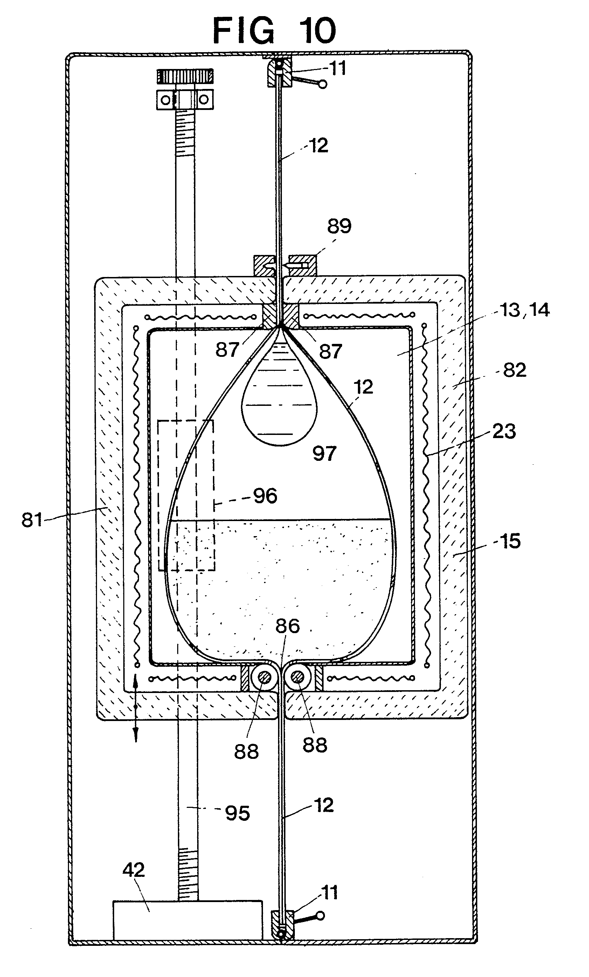

Figure 10 shows a section through a fifth embodiment in which the baking oven is movable with respect to the fixed vessel.

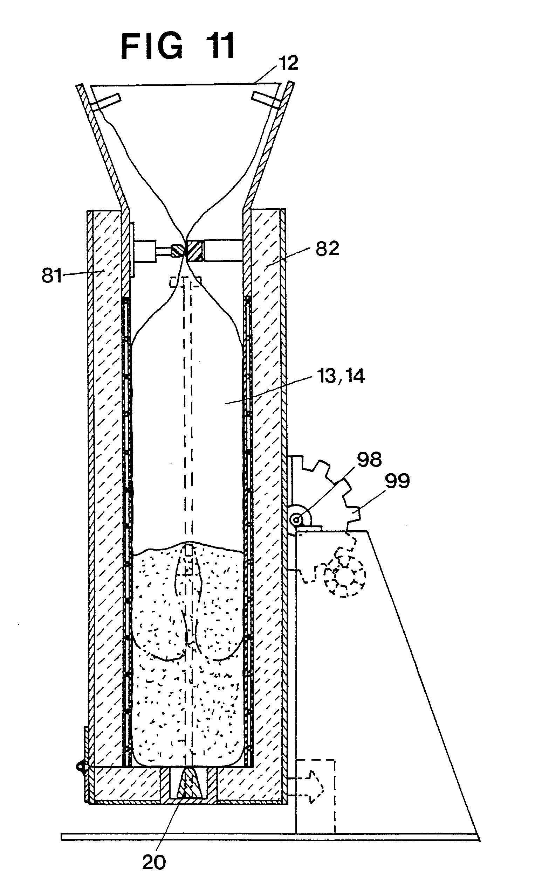

Figure 11 shows a section through a sixth embodiment of a baking apparatus for making round loafs, pizzas or the like.

Description of preferred embodiments
Figures 1—3:

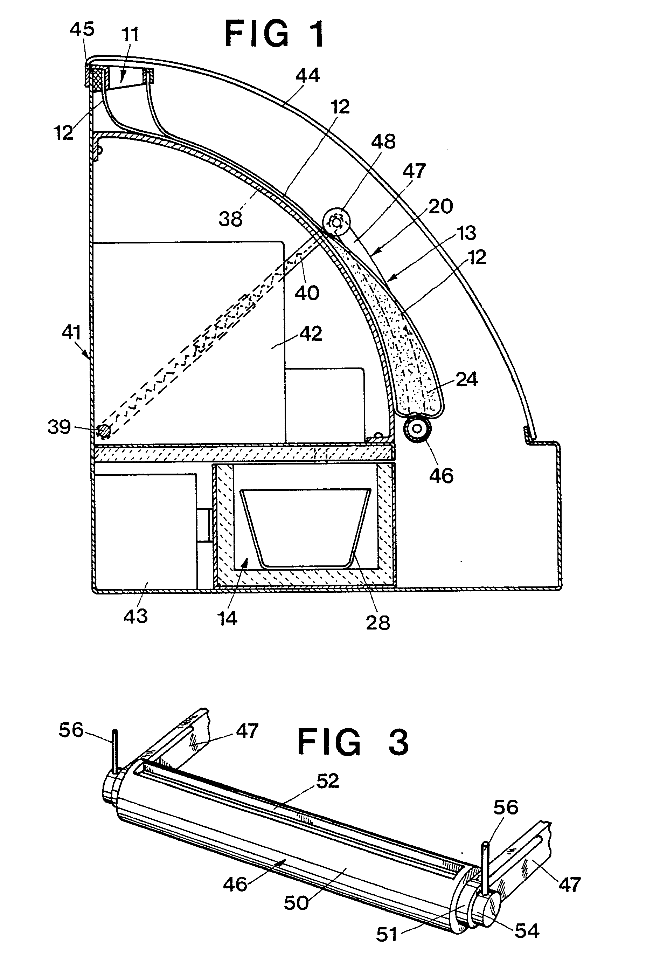

The dough preparation station of the baking apparatus can be designed in many ways, and a first variant is shown in Figs. 1—2. In this embodiment the ingredients in the plastic bag 12 and the dough 24 are worked along a path, which principally has the same function as a rolling board. The path or the rolling board 38 is curved and forms a part of a circular arc in the center of which a pivot axle 39 is arranged, which transfers its movement to two arms 40. The rolling board 38 is fixedly attached in a housing 41 comprising the dough preparation station 13 with the driving means 42 for the arms 40 and a heat treatment station 14 or baking oven with a driving means 43 for linear movement of the baking oven 14 from a pushed-in to a drawn-out position. The housing 41 is further provided with a lid 44 pivoted about a hinge 45. A holding means 11 for carrying the upper opening of the plastic bag 12 is also pivoted about said hinge.

The dough preparation station 13 consists of the above mentioned arms 40 placed on each side of the part-cylindrical rolling board 38. To the upper end of the arms 40 are attached kneading means 20 consisting of a roller 46 arranged at the free end of a pair of links 47 which are rotatably attached to a pressing roll 48 which is freely rotatably mounted at the free ends of the arms 40.

The upper end of the rolling board 38 is formed with a somewhat larger radius than the rest of the rolling board so that a harder pressure by the pressing roll 48 against the rolling board 38 is obtained in that area. The arms are preferably in the form of telescoping arms in which is arranged a tension spring exerting a predetermined pressure on the pressing roll 48 against the rolling board 38.

The roller 46 is appropriately made with fixation pieces 49 through which the lower end of the plastic bag 12 can be affixed to the roller. In the embodiment of Fig. 2 and 3 the roller 46 consists of an outer casing, for example of a somewhat elastic material, such as synthetic rubber, and an inner cylinder 51, which is rotatably mounted at the free ends of the links 47. Each of the outer casing 50 and the inner cylinder 51 is equipped with its own slit 52, 53 in which the lower end of the plastic bag can be inserted and fixed by moving the outer casing 50 relative to the cylinder 51. The lower end part of the plastic bag inserted in the slit may already be slitted and held closed by the fixation pieces 49, but it is also possible to equip the roller 46 with a cutting device 27 in the form of a slitted bushing 54 inside the inner cylinder, the slit being placed opposite the slits 53 and 52 so that the extreme end of the plastic bag can be inserted in the slit 55. The bushing 54 is longer than the inner cylinder 51 and actuating members 56 are attached to the portions outside the inner cylinder 51 which in a certain position of the roller 46 cooperates with fixed abutments (not shown) so that the bushing is turned in relation to the cylinder whereby the end of the plastic bag inserted in the slit 55 is cut off.

The flexible vessel 12, which e.g. can be a plastic bag of a heat resistant material, can be used as a transportation package for the dry ingredients from the producer to the user and as a vessel during the preparation of the dough and therefore withstand rough mechanical treatment and possibly also contains a second plastic bag or the like, in which is contained the liquid required for preparation of the dough. Alternatively the dough liquid can also be added through a nozzle 16, especially if the liquid is only water. The plastic bag 12 is attached to at least two holding means 11 which are so formed that the end pieces of the opening 18 of the plastic bag can be squeezed between gripping means 17. After attaching the plastic bag 12 to the holding means 11 the baking apparatus is programmed by, for example, a punched card which is sensed by the programmer which then takes care of the whole production process. The punched card could possibly be supplied with the dry ingredients, attached to the package or alternatively be part of a program library belonging to the baking apparatus.

The plastic bag 12 can either in a separate bag contain baking liquid, which separate bag through the action of the dough preparation station is opened so that its content is emptied into the plastig bag, or also it is possible to add the liquid manually as will be described below.

In accordance with what is shown in Fig. 1 the upper end of the plastic bag is fixed in the holding means 11 of the baking apparatus, which holds the bag open so that an opening is formed. In that position the kneading means 20 of the dough preparation station are placed in the position in which the plastic bag can be drawn under the pressing roll 48 while the lower end of the plastic bag can simultaneously be fixed to the roller 46.

When the bag is in place the arms 40 are moved to their upper position in which the roller 48 exerts a pressure so great against the bag and rolling board 38 that an effective sealing is achieved. Then the dough liquid can be poured into the funnel-shaped upper part of the plastic bag 12 and the timer in the baking apparatus programmer is set to the desired initiation time.

At an appropriate time the arms are activated and moved downwards so that the liquid can run down and after a number of up and down movements about the axle 39 the dry ingredients have been mixed with the baking liquid to form a doughy mass. Depending on the baking recipe the kneading is repeated an appropriate number of times interrupted by fermentation periods. When the dough is completedly worked and fermented the programmer starts the drive mechanism which moves the baking oven 14 to the position in which the baking tin 28 is positioned under the lower end of the plastic bag 12.

In order to open the plastic bag the arms 40 execute a much larger arcuate motion in comparison to the kneading motion, whereby the lower part of the plastic bag is cut off and released from the roller 46 while the pressing roll 48 presses the dough mass out of the lower opening of the plastic bag and into the baking form 28 during the rollers downward motion. The baking oven 14 is then drawn back to its original position where the actual baking takes place.

Figures 4—6:

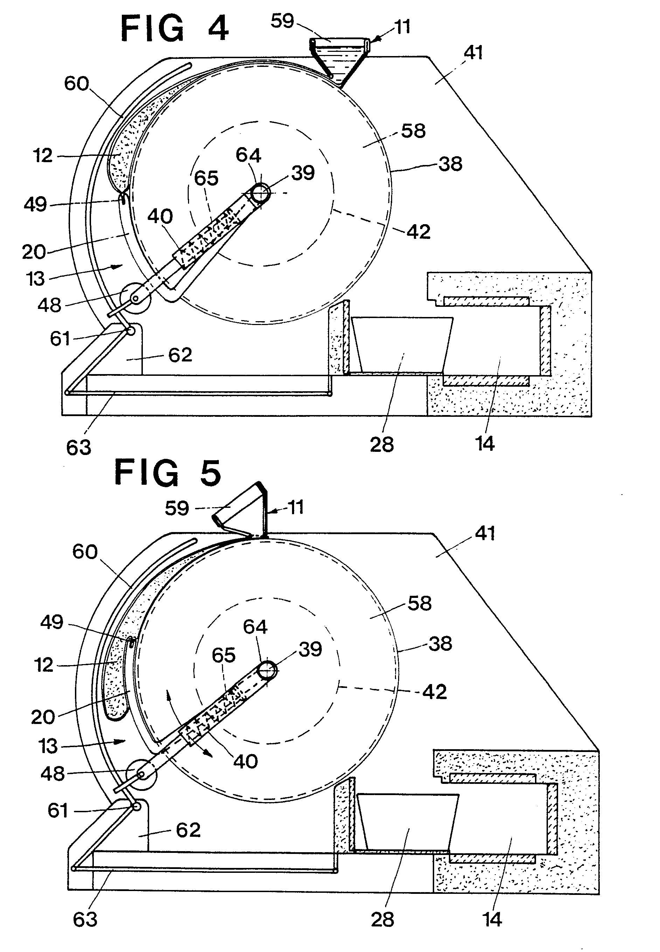

In the embodiment according to Figs. 4—6 the curved path i.e. the baking board 38, consists of a cylinder with a circular cross section and rotatably mounted in the baking oven housing 41. In the same way as in the previous embodiments this is equipped with a kneading means 20 rotatable from the center of a drum 58, which kneading means is equipped with fixation means 49 at its free end for holding the lower end of the plastic bag 12. The upper end of the bag is connected to a holding means 11 in such a way that a funnel-shaped opening is formed, whereby the attachment can be performed by drawing the folded edges of the plastic bag around the opening over a frame 59 fastened to the holding means 11.

A pressing roll 48 is also rotatably affixed at the center of the drum 58 and is spring supported by two arms 40 whereby the springs draw the pressing roll 48 radially inwardly towards the envelope surface of the drum 58. The pressing roll 48 is further guided by guide means 60 which is curved along the curve of the drum and which is rotatable about a hinge 61 by a drive mechanism 62. The guide means 60 can also be formed by the front cover of the baking apparatus. It is possible that a rod means 63 can come from the drive mechanism 62 which together with manoeuvering the cover 60 moves the baking tin 28 from a position outside the heat treatment station 14 to a position within.

In the initial position (Fig. 4) the holding means 11 is placed on one side, the right side, of the highest point of the drum 58. In that position the plastic bag with the dry ingredients is attached to the holding means 11, at which upper part of the plastic bag is formed a funnel-like opening. Into this opening is poured the required amount of liquid to form the dough and then the baking apparatus timer is adjusted to the desired start time. In a programmer, not shown, a program card is inserted or a desired program is started. After the allotted time the drum 58 is turned slowly counter clockwise until the funnel-shaped opening is located at the highest point of the drum 58 and the liquid can flow over to that part of the plastic bag where the dry ingredients are located (Fig. 5). During rotation of the drum in counter clockwise direction the kneading means 20, which is fixed to the lower end of the bag, will move. When essentially all of the liquid has been emptied into the bag the kneading means 20 is activated and carries out a to and fro motion about the central drive axle 39 of the drum by means of a drive mechanism 42 placed in the drum.

It is possible that the kneading can be augmented by the pressing roll 48 which independently of the kneading means 20 is rotatable around a pipe axle 64 about the rotation axle 39. By means of the guide 60 the pressing roll 48 can be held at an appropriate distance from the baking board 38 of the drum 58 by means of a spring 65 so that an appropriate redistribution of the dough mass in the plastic bag 12 is achieved. Working the dough through the kneading piece 20 is shown in Fig. 5.

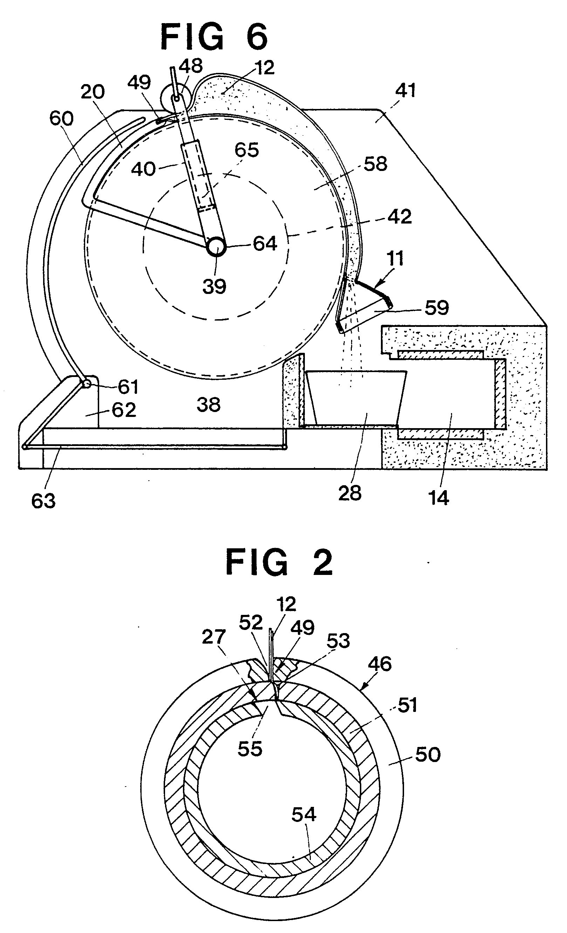

The guide 60 acting as a cover can be adjusted for light pressure on the plastic bag during the fermentation periods, whereby an effective distribution of the heat from the fermentation process is achieved. The cover is appropriately made of a heat conducting material, for example aluminum. During the fermentation itself the cover can only weakly contact the plastic bag and must give way when the dough expands. When the dough preparation is finished the drum 58 is rotated clockwise enough that the tunnel-shaped opening with the holding means 11 is located above the baking tin 28, as shown in Fig. 6. The kneading means 20 also partakes of this motion so that the plastic bag 12 is turned upside down. In this position the pressing roll 48 is activated, which has left the guide 60 and is biased by the spring 65 in the direction towards the rolling board 38 of the drum 58. The pressing roll 48 is moved over the whole length of the plastic bag up to the funnel-shaped holding means 11 pressing the dough out of the plastic bag opening and into the baking tin 28. Before the actual baking takes place a further fermentation can be performed. Finally the drive mechanism 62 moves the baking tin 28 into the heat treatment station 14 where it is possible for a final fermentation to take place and the baking is carried out. When the baking procedure is concluded it is possible that the baking tin 28 is again taken out of the baking oven so that the bread can cool outside the oven.

Depending on what kind of food product is to be produced in the baking apparatus the heat treatment station is adjusted also in accordance with those requirements. If the dough for example is to be boiled in water or fried in oil the baking tin is exchanged for an appropriate cooking vessel.

Figure 7:

The embodiment shown in Fig. 7 comprises a common dough preparation and heat treatment station 13, 14 consisting of two housing halves 81, 82 of which the first one 81 is stationary while the second one 82 is displaceable or rotatable with respect to the stationary half. In the embodiment shown the movable housing half 82 is rotatable about a vertical hinge 83 so that the dough preparation and heat treament stations 13, 14 and the holding means can be reached.

The mixing of the ingredients and the dough preparation is accomplished by attaching the upper end portion of the plastic bag 12 to a holding means 11 at an upper rotatable roll 84, while the lower end of the plastic bag in a corresponding way is attached to another holding means 11 at a lower rotatable roll 85. The rolls 84 and 85 are driven by a reversible motor (not shown) about one revolution, after which the motor is reversed. In this way the plastic bag 12 is given an oscillating up and downwards movement. The plastic bag must pass through an upper and a lower slit-shaped opening 86 between the housing halves 81 and 82, which only permits a substantially empty plastic bag to pass. This means that the content of the plastic bag—the dough—alternatively will be kneaded against the upper and lower part of the inner walls of the baking oven 14, where the slit 86 is located. In order to reduce the friction between the plastic bag and the edge between the slit and the inner wall, these parts can be provided with rounded sliding surfaces 87 or rolls 88.

Practical test have proved that a very effective mixing and kneading of the dough is achieved by this very simple device, even if the dough is relatively stiff. If rolls 88 are used as friction-reducing means, these can be driven so that they also can serve as transport and feeding rolls.

The plastic bags with the ingredients are preferably delivered hermetically sealed and if the baking recipe prescribes that the preparation of the dough and/or the baking should be made under atmospheric conditions it is appropriate to arrange a perforation and/or cutting device 89, which can perforate the plastic bag in a certain position, so that the interior of the bag will communicate with the atmosphere. The device also can provide a cutting-off of the bag, which may be desired during the baking procedure, especially in cases where the interior space of the baking oven also should serve as a baking tin and where it is desired that the dough should spread over the entire baking tin and not be limited by an expanded bag 12.

Figures 8 and 9:

In the embodiment according to Fig. 8 the holding means 11 consist of driven rolls 91 provided with teeth 90, which engage perforations 92 at the side edges of the plastic bag, by which the plastic bag 12 can be transported up and down in the same way as was described with reference to the embodiment of Fig. 7. This new embodiment however has the advantage that the construction can be made even more compact, i.e. with a lower constructional height, and that the attachment of the plastic bag 12 to the attachment members of the combined holding- and transport device, i.e. the teeth 90, can be simplified further.

Figure 10:

Another alternative embodiment of the baking apparatus shown in Figs. 7, 8 and 9 is shown in Fig. 10, where the plastic bag is stationary, i.e. it is at its upper and lower ends attached to appropriate holding means 11, while the combined dough preparation and heat treatment station 13, 14 in its two-piece design is movable in the longitudinal direction of the plastic bag 12. This displaceability of the baking oven is provided by means of two spindles 95 arranged on opposite sides of the baking oven and rotatable by means of a motor 42, the spindles cooperating with nuts 96 fixedly attached to the outer casing of the baking oven. With the up- and downwards movement of the baking oven a bag 97 with the baking liquid will in the same way as in the embodiment according to Figs. 7—9 and in cooperation with the slide or roll members 87 and/or 88 in the slits 86 burst the bag 97 so that its contents, i.e. the liquid can mix with the dry ingredients in the plastic bag 12. By giving the baking oven 14 an up- and downwards motion the dough in the plastic bag will be kneaded to and fro, by which an effective kneading is achieved.

Figure 11:

The baking of round bread loafs, pizzas and the like is also possible with the baking apparatus according to the invention. In Fig. 1 is shown a section through a baking apparatus which is constructed so that mixing of the ingredients and the kneading of the dough is made by the combined dough kneading—and heat treatment station 13, 14 located in vertical position, while the bread loaf or pizza is rolled out with the apparatus in orizontal position. For this purpose the baking oven is pivoted about a pivot 98, which by way of a gear 99 and a motor (not shown) can be turned from vertical to horizontal position and vice versa. The working of the dough is made by means of a kneading means 20 movable in the longitudinal direction of the dough kneading station 13 and which during its up- and downwards motion in the kneading station works the dough mass. In the same was as was described above the liquid can be supplied to the ingredients at an appropriate time.

The invention is not limited to the embodiments described and shown but a plurality of modifications and combinations of details from the different embodiments are possible within the scope of the claims. It would be possible to have e.g. spray nozzles (not shown) for spraying the dough or the finished baked product with water or another appropriate liquid for creating a crust and/or a glossy surface on the bread.

**Claims**

1. An apparatus for automatically making food products in piece form, such as bread, from dry and/or wet substances comprising:

a mixing- and dough preparation station (13);

a heat treatment station (13, 14) containing heating means (23) whereby the dough-like substances are treated; and

program means for the operation of the aforementioned element, so that the apparatus will make the food product and such product will be in the fresh prepared state at the desired time,

characterized in, that the dough preparation station (13) comprises:

a mixing and dough preparation vessel in form of a flexible, sealable bag (12) containing the necessary dry ingredients;

holding means (11, 49) adapted to be affixed to at least one end portion of the bag (12);

kneading means (20) for mechanically working the liquid and dry ingredients in said bag (12) by external mechanical agitation thereof; and

that the bag and the mixing- and kneading means are arranged such that one performs an oscillating movement with respect to the other, which movement is substantially parallel to the major part of the surface of the bag in the area where the bag and the mixing means are in contact.

2. The apparatus as claimed in claim 1, characterized in, that the mixing- and dough preparation station (13) and the heat treatment station (14) are separate and that the mixing- and kneading means (20; 86—88) are arranged to squeeze the prepared dough out of the bag (11) into a baking tin (28) or the like arranged in the heat treatment station.

3. The apparatus as claimed in claim 1, characterized in, that the mixing- and dough preparation station (13) and the heat treatment station (14) are arranged within one chamber (81, 82), and that the apparatus is designed to heat-treat e.g.—bake the prepared dough in the flexible sealable bag, without the bag being removed from the chamber.

4. The apparatus claimed in claim 1, characterized in, that the mixing- and dough preparation station (13) and the heat treatment station (13, 14) are arranged within one chamber (81, 82) which also contains a baking tin (28) and that the mixing and kneading means (20; 86—88) are arranged to press the prepared dough out of the bag (11) into the baking-tin (28).

5. The apparatus as claimed in any of the preceding claims, characterized in, that the holding means (11; 49) is arranged to grip the bag at at least one end thereof, which end may be open.

6. The apparatus as claimed in any of the preceding claims, characterized in, that the bag (12) is surrounded by a second flexible bag or casing (30) which is designed to withstand the mechanical stress caused by the kneading means (20, 87, 88).

7. The apparatus as claimed in any of the preceding claims, characterized in, that the bag (12) is arranged to perform an oscillating movement through and between two slit-shaped openings (86) located remotely from each other in the walls of a chamber (81, 81), and that the openings (86) are designed such that they permit the bag to pass through only in a substantially empty state, the ingredients consequently being mixed and worked and remaining within the chamber.

8. The apparatus as claimed in claim 7, characterized in, that the slit-shaped openings (86) are located in the partition plane between two housing halves (81, 82), defining the chamber which forms the kneading- and heat treatment station (13, 14) and at least one of which (82) is movable towards and away from the other to allow access to the interior of the chamber.

9. The apparatus as claimed in claim 7 or 8, characterized in, that the oscillating movement is transmitted through two rotatable rollers (90, 91) or the like each of which is located outside of the chamber adjacent to its respective slit-shaped openings (86) and is provided with means for gripping the bag (12).

10. The apparatus as claimed in any of claims 7—9, characterized in, that the driving means (42, 95) acts upon the chamber (81, 82) such that the chamber performs the oscillating movement and the bag remains stationary.

11. The apparatus as claimed in any of the preceding claims, characterized in, that the mixing- and dough preparation station (13) comprises at least two kneading means (20, 38; 87, 88) cooperating with each other and between which kneading is effected.

12. The apparatus as claimed in any of the preceding claims, characterized in, that the mixing- and dough preparation station (13) comprises at least one kneading member (20) cooperating with a surface (38) serving as a kneading board, which kneading member may comprise a roller (46) which is movable substantially parallel to the surface which is arranged to knead dough contained in a bag (12) which bears against the surface (38).

13. The apparatus as claimed in claim 12, characterized in, that the kneading member (20) is provided with means (49) for gripping one end of the bag (12).

14. The apparatus as claimed in claim 12 or 13, characterized in, that a pressure roller (48) is arranged to move along said surface (38) thereby squeezing said dough out of one open end of the bag.

15. The apparatus as claimed in claim 14, characterized in, that the surface (38) is arc-shaped along an essential portion of its length, the kneading means (20) and/or the pressure roller (48) move around an axis coincident with the center of the circle defining the arc.

16. The apparatus as claimed in claim 15, characterized in, that the radius of the arc-shaped surface increases towards that portion of the surface against which the upper end of the bag bears in order to increase the load exerted by the pressure roller thereby effectively sealing the upper part of the bag from the lower part.

17. The apparatus as claimed in any of the preceding claims, characterized in, that the means (11) for gripping the bag (12) are arranged such that the open end of the bag (12) is formed as a funnel.

18. The apparatus as claimed in claim 3 or any claim appended to it, characterized in, that the chamber containing both the mixing and dough preparation station and the heat treatment station (13, 14) is pivotable between vertical and horizontal positions.

**Patentansprüche**

1. Vorrichtung zur automatischen Herstellung von Lebensmitteln in Stückform, wie z.B. Brot, aus trockenen und/oder nassen Zutaten, bestehend aus

einer Misch- und Teigzubereitungsstation (13);

einer Wärmebehandlungsstation (13, 14), die eine Heizeinrichtung (23) enthält, wodurch die teigartigen Zutaten behandelt werden; und

eine Programmsteuerung zur Steuerung des vorstehend genannten Elements, so daß die Vorrichtung das Nahrungsmittel herstellt und sich dieses zur gewünschten Zeit in einem frisch zubereiteten Zustand befindet,

dadurch gekennzeichnet,

daß die Teigzubereitungsstation (13) umfaßt:

ein Misch- und Teigzubereitungsgegäß in Form eines flexiblen, verschließbaren Beutels (12), der die erforderlichen trockenen Zutaten enthält;

Haltemittel (11, 49), die an mindestens einem Endbereich des Beutels (12) befestigbar sind;

Knetmittel (20) zur mechanischen Bearbeitung der flüssigen und trockenen Zutaten in dem Beutel (12) durch äußere mechanische Bearbeitung desselben; und

daß der Beutel und die Misch- und Knetmittel derart angeordnet sind, daß eines in Bezug auf das andere eine hin- und hergehende Bewegung ausführt, wobei diese Bewegung zu einem Hauptteil der Oberfläche des Beutels in einem Bereich, wo der Beutel und die Mischmittel in Berührung stehen, im wesentlichen parallel ist.

2. Vorrichtung nach Anspruch 1, dadurch gekennzeichnet, daß die Misch- und Teigzubereitungsstation (13) und die Wärmebehandlungsstation (14) getrennt sind und daß die Misch- und Knetmittel (20; 86—88) so angeordnet ist, daß sie den zubereiteten Teig aus dem Beutel (12) herausquetschen in eine Backform (28) od. dgl., die in der Wärmebehandlungsstation angeordnet ist.

3. Vorrichtung nach Anspruch 1, dadurch gekennzeichnet, daß die Misch- und Teigzubereitungsstation (13) und die Wärmebehandlungsstation (14) in einer Kammer (81, 82) angeordnet sind und daß die Vorrichtung so ausgebildet ist, um den zubereiteten Teig in dem flexiblen verschließbaren Beutel mit Wärme zu behandeln, beispielsweise zu backen, ohne, daß der Beutel aus der Kammer entnommen wird.

4. Vorrichtung nach Anspruch 1, dadurch gekennzeichnet, daß die Misch- und Teigzubereitungsstation (13) und die Wärmebehandlungsstation (13, 14) in einer Kammer (81, 82) enthalten sind, die auch eine Backform (28) enthält, und daß die Misch- und Knetmittel (20; 86—88) so angeordnet sind, daß sie den zubereiteten Teig aus dem Beutel (12) in die Backform (28) pressen.

5. Vorrichtung nach einem der vorhergehenden Ansprüche, dadurch gekennzeichnet, daß die Haltemittel (11; 49) so angeordnet sind, um den Beutel an mindestens einem Ende desselben zu erfassen, wobei dieses Ende offen sein kann.

6. Vorrichtung nach einem der vorhergehenden Ansprüche, dadurch gekennzeichnet, daß der Beutel (12) von einem zweiten flexiblen Beutel oder Behälter (30) umgeben ist, der den durch die Knetmittel (20, 87, 88) verursachten mechanischen Belastungen standhält.

7. Vorrichtung nach einem der vorhergehenden Ansprüche, dadurch gekennzeichnet, daß der Beutel (12) so angeordnet ist, daß er eine hin- und hergehende Bewegung durch und zwischen zwei schlitzförmigen Öffnungen (86) ausführt, die im gegenseitigen Abstand in den Wänden einer Kammer (81, 81) angeordnet sind, und daß die Öffnungen (86) so ausgebildet sind, daß sie den Beutel nur in einem im wesentlichen leeren Zustand hindurchlassen, wobei die Zutaten demzufolge gemischt und bearbeitet werden, während sie in der Kammer verbleiben.

8. Vorrichtung nach Anspruch 7, dadurch gekennzeichnet, daß die schlitzförmigen Öffnungen (86) in der Trennebene zwischen zwei Gehäusehälften (81, 82) angeordnet sind, welche die die Knet- und Wärmebehandlungsstation (13, 14) bildende Kammer begrenzen, wobei mindestens eine Gehäusehälfte (82) gegenüber der anderen abstandsveränderlich angeordnet ist, um zum Inneren der Kammer zu gelangen.

9. Vorrichtung nach Anspruch 7 oder 8, dadurch gekennzeichnet, daß die hin- und hergehende Bewegung durch zwei drehbaren Walzen (90, 91) od. dgl. übertragen wird, die jeweils außerhalb der Kammer nahe deren schitzförmigen Öffnungen (86) angeordnet und mit Mitteln zum Erfassen des Beutels (12) versehen sind.

10. Vorrichtung nach einem der Ansprüche 7 bis 9, dadurch gekennzeichnet, daß die Antriebseinrichtung (42, 95) derart auf die Kammer (81, 82) einwirkt, daß die Kammer die hin- und hergehende Bewegung ausführt, während der Beutel ortsfest bleibt.

11. Vorrichtung nach einem der vorhergehenden Ansprüche, dadurch gekennzeichnet, daß die Misch- und Teigzubereitungsstation (13) mindestens zwei Knetmittel (20, 38; 87, 88) aufweist, die zusammenwirken und zwischen denen der Knetvorgang bewirkt wird.

12. Vorrichtung nach einem der vorhergehenden Ansprüche, dadurch gekennzeichnet, daß die Misch- und Teigzubereitungsstation (13) mindestens ein Knetteil (20) aufweist, das mit einer als Knetblech dienenden Fläche (38) zusammenwirkt, wobei das Knetteil aus einer Walze (46) bestehen kann, die im wesentlichen parallel zu der Fläche bewegbar ist, die so angeordnet ist, um den in einem an der Fläche (38) anliegenden Beutel (12) enthaltenen Teig zu kneten.

13. Vorrichtung nach Anspruch 12, dadurch gekennzeichnet, daß das Knetteil (20) mit Mitteln (49) zum Erfassen eines Endes des Beutels (12) versehen ist.

14. Vorrichtung nach Anspruch 12 oder 13, dadurch gekennzeichnet, daß eine Preßwalze (48) längs der Fläche (38) bewegbar ist, um den Teig aus dem offenen Ende des Beutels herauszudrücken.

15. Vorrichtung nach Anspruch 14, dadurch gekennzeichnet, daß die Fläche (38) über einen wesentlichen Teil ihrer Länge bogenförmig ist und daß das Knetteil (20) und/oder die Anpreßwalze (48) um eine Achse bewegbar ist, die mit dem Zentrum des Kreisbogens zusammenfällt.

16. Vorrichtung nach Anspruch 15, dadurch gekennzeichnet, daß der Radius der Bogenfläche zu demjenigen Bereich der Fläche hin zunimmt, an dem das obere Ende des Beutels anliegt, um die von der Anpreßwalze ausgeübte Belastung zu vergrößern, wodurch der obere Teil des Beutels vom unteren Teil wirksam abgedichtet wird.

17. Vorrichtung nach einem der vorhergehenden Ansprüche, dadurch gekennzeichnet, daß die Mittel (11) zum Erfassen des Beutels (12) so ausgebildet sind, daß das offene Ende des Beutels (12) als Trichter geformt ist.

18. Vorrichtung nach Anspruch 3 oder einem der auf diesen rückbezogenen Ansprüche, dadurch gekennzeichnet, daß die Kammer, die sowohl die Misch- und Teigzubereitungsstation als auch die Wärmebehandlungsstation (13, 14) enthält, zwischen einer vertikalen und einer horizontalen Lage verschwenkbar ist.

**Revendications**

1. Appareil pour la préparation automatique de produits alimentaires en morceaux, tels que du pain, à partir de substances sèches et/ou humides, comprenant: une station (13) de mélange et de préparation de pâte; une station (13, 14) de traitement à chaud contenant des moyens de chauffage (23) afin de traiter les substances pâteuses; et des moyens de programmation du fonctionnement des éléments précités, de sorte que l'appareil fabrique le produit alimentaire et que ce produit est à l'état préparé frais au moment désiré, caractérisé en ce que la station (13) de préparation de pâte comprend:

—un récipient de mélange et de préparation de pâté, sous la forme d'un sac flexible fermable (12) contenant les ingrédients secs nécessaires;

—des moyens de retenue (11, 49) prévus pour se fixer à au moins une partie d'extrémité du sac (12);

—des moyens de pétrissage (20) pour travailler mécaniquement les ingrédients secs et liquides dans ledit sac (12), par son agitation mécanique externe;

et en ce que le sac et les moyens de mélange et de pétrissage sont agencés de sorte que l'un effectue un mouvement oscillant par rapport aux autres, ce mouvement étant sensiblement parallèle à la plus grande partie de la surface du sac dans la zone où le sac et les moyens de mélange sont en contact.

2. Appareil suivant la revendication 1, caractérisé en ce que la station (13) de mélange et de préparation de pâte et la station 14) de traitement à chaud sont séparées et en ce que les moyens de mélange et de pétrissage (20; 86—88) sont agencés de manière à exprimer par pression la pâte préparée, hors du sac (11) et dans un moule de cuisson (28) ou analogue placé dans la station de traitement à chaud.

3. Appareil suivant la revendication 1, caractérisé en ce que la station (13) de mélange et de préparation de pâte et la station (14) de traitement à chaud sont disposées à l'intérieur d'une chambre (81, 82) et en ce que l'appareil est conçu pour traiter à chaud, par exemple pour cuire, la pâte préparée dans le sac flexible fermable, sans retirer le sac de la chambre.

4. Appareil suivant la revendication 1, caractérisé en ce que la station (13) de mélange et de préparation de pâte et la station (13, 14) de traitement a chaud sont disposées à l'intérieur d'une chambre (81, 82) qui contient également un moule de cuisson (28) et en ce que les moyens de mélange et de pétrissage (20; 86—88) sont agencés de manière à presser la pâte préparée, pour qu'elle sorte du sac (11) et passe dans le moule de cuisson (28).

5. Appareil suivant l'une quelconque des revendications précédentes, caractérisé en ce que les moyens de retenue (11; 49) sont prévus pour saisir le sac à au moins une extrémité de celui-ci, cette extrémite pouvant être ouverte.

6. Appareil suivant l'une quelconque des revendications précédentes, caractérisé en ce que le sac (12) est entouré d'un deuxième sac flexible ou d'une enveloppe (30) qui est prévue pour résister à la contrainte mécanique engendrée par les moyens de pétrissage (20, 87, 88).

7. Appareil suivant l'une quelconque des revendications précédentes, caractérisé en ce que le sac (12) est disposé de manière à effectuer un mouvement oscillant à travers et entre deux ouvertures en forme de fente (86) situées à distance l'une de l'autre dans les parois d'une chambre (81, 81) et en ce que les ouvertures (86) sont prévues de sorte qu'elles permettent le passage du sac seulement dans un état sensiblement vide, les ingrédients étant par conséquent melangés et travaillés et restant à l'intérieur de la chambre.

8. Appareil suivant la revendication 7, caractérisé en ce que les ouvertures en forme de fente (86) sont situées dans le plan de séparation entre deux demi-caissons (81, 82), définissant la chambre qui forme la station de pétrissage et de traitement à chaud (13, 14), et au moins l'un (82) des demi-caissons est mobile de manière à se rapprocher et à s'éloigner de l'autre pour permettre l'accès à l'intérieur de la chambre.

9. Appareil suivant la revendication 7 ou 8, caractérisé en ce que le mouvement oscillsant est transmis par l'intermédiaire de deux rouleux rotatifs (90, 91) ou analogues dont chacun est situé à l'extérieur de la chambre, près de son ouverture respective en forme de fente (86), et comporte des moyens pour saisir le sac (12).

10. Appareil suivant l'une quelconque des revendications 7 à 9, caractérisé en ce que les moyens d'entraînement (42, 95) agissent sur la chambre (81, 82) de sorte que la chambre effectue le mouvement oscillant et que sac reste fixe.

11. Appareil suivant l'une quelconque des revendications précédentes, caractérisé en ce que la station (13) de mélange et de préparation de pâte comprend au moins deux éléments de pétrissage (20, 38; 87, 88) qui coopèrent mutuellement et entre lesqueles le pétrissage est effectue.

12. Appareil suivant l'une quelconque des revendications précédentes, caractérisé en ce que la station (13) de mélange et de préparation de pâte comprend au moins un élément de pétrissage (20) coopérant avec une surface (38) qui sert de planche à pétrir, cet élément de pétrissage pouvant comprendre un rouleau (46) qui est mobile sensiblement parallèlement à la surface qui est disposée pour pétrir la pâte contenue dans un sac (12) appliqué contre la surface (38).

13. Appareil suivant la revendication 12, caractérisé en ce que l'élément de pétrissage (20) comporte des moyens (49) pour saisir une extrémité du sac (12).

14. Appareil suivant la revendication 12 ou 13, caractérisé en ce qu'un rouleau de pression (48) est prévu pour se déplacer le long de ladite surface (38) de manière à exprimer par pression la dite pâte à une extrémité ouverte du sac.

15. Appareil suivant la revendication 14, caractérisé en ce que la surface (38) est arquée le long d'une partie principale de sa longueur, les moyens de pétrissage (20) et/ou le rouleau de pression (48) se déplaçant autour d'un axe qui coïncide avec le centre du cercle définissant l'arc.

16. Appareil suivant la revendication 15, caractérisé en ce que le rayon de la surface arquée augmente vers la partie de la surface contre laquelle est appliquée l'extrémité supérieure du sac, afin d'augmenter la charge exercée par le rouleau de pression de manière à isoler effectivement la partie supérieure du sac de la partie inferieure.

17. Appareil suivant l'une quelconque des revendications précédentes, caractérisé en ce que les moyens (11) pour saisir le sac (12) sont agencés de sorte que l'extrémité ouverte du sac (12) prend la forme d'un entonnoir.

18. Appareil suivant la revendication 3, ou toute revendication dépendant de celle-ci, caractérisé en ce que la chambre contenant à la fois la station de mélange et de préparation de pâte et la station de traitement à chaud (13, 14) peut pivoter entre une position verticale et une position horizontale.

# FIG 1

# FIG 3

# FIG 4

# FIG 5

# FIG 6

# FIG 2

# FIG 7

# FIG 8

# FIG 9

# FIG 10

# FIG 11